Europäisches Patentamt

European Patent Office

Office européen des brevets

(19)

(11) Veröffentlichungsnummer: **0 249 828**
**A2**

(12) # EUROPÄISCHE PATENTANMELDUNG

(21) Anmeldenummer: **87108158.4**

(22) Anmeldetag: **05.06.87**

(51) Int. Cl.⁴: **C 08 J 3/02, C 08 F 8/44**

(30) Priorität: **14.06.86 DE 3620145**

(43) Veröffentlichungstag der Anmeldung: **23.12.87**
**Patentblatt 87/52**

(84) Benannte Vertragsstaaten: **AT BE CH DE ES FR GB IT LI LU NL SE**

(71) Anmelder: **RB Kunststoffpatent-Verwertungs AG, Westbahnhofstrasse 11, CH-4500 Solothurn (CH)**

(72) Erfinder: **Deibig, Heinrich, Dr., Vorstedli 395, CH-4524 Günsberg/Solothurn (CH)**
Erfinder: **Ruggieri, Juan Carlos, Emil-Schibli-Strasse 24, CH-2534 Lengnau (CH)**
Erfinder: **Dinkelaker, Albrecht, Blümlisalpstrasse 20, CH-4562 Biberist (CH)**

(74) Vertreter: **Patentanwälte RUFF, BEIER und SCHÖNDORF, Neckarstrasse 50, D-7000 Stuttgart 1 (DE)**

(54) Wässrige Polymerdispersion und Verfahren zu ihrer Herstellung sowie Verwendung.

(57) Die Erfindung betrifft eine wäßrige Polymerdispersion, bei der die Polymere Carboxylgruppen enthalten und durch Einstellen des pH-Wertes in ihrem Verhalten einstellbar sind. Es handelt sich bei den Polymeren um unvernetzte Copolymere oder Terpolymere, deren Carboxylgruppen teilweise neutralisiert sind. Das Dispersionsmedium ist frei von organischen Lösungsmitteln und vorzugsweise frei von Netzmitteln und Fremdionen. Die Herstellung der Dispersion erfolgt vorzugsweise ausgehend vom fertigen Polymerisat durch Zerkleinerung in wäßrigem, vorzugsweise alkalischem Medium. Die Dispersionen sind geeignet zur Herstellung von Schutzüberzügen.

PATENTANWÄLTE  RUFF UND BEIER  STUTTGART

Dipl.-Chem. Dr. Ruff
Dipl.-Ing. J. Beier
Dipl.-Phys. Schöndorf

Neckarstraße 50
D-7000 Stuttgart 1
Tel.: (0711) 22 70 51*
Telex 07-23412 erub d
Telefax (49) 0711-29 29 35

A 22 231                                22. Mai 1987 R/lg

Anmelderin:      RB Kunststoffpatent-
                 Verwertungs AG
                 Westbahnhofstraße 11

                 CH-4500 Solothurn

## Beschreibung

- - - - -

## Wäßrige Polymerdisperion und Verfahren zu ihrer Herstellung sowie Verwendung

Die Erfindung betrifft eine wäßrige Dispersion aus Polymeren von mindestens zwei verschiedenen einfach ungesättigten radikalisch polymerisierbaren Verbindungen, von denen mindestens eine eine einfach ungesättigte Monocarbonsäure ist, sowie ein Verfahren zur Herstellung der Dispersion und ihre Verwendung.

Wäßrige Dispersionen von Polymeren von Monocarbonsäuren, insbesondere von Copolymeren und Terpolymeren der Acrylsäure bzw. der Methacrylsäure sind bereits bekannt. Es sei in diesem Zusammenhang verwiesen auf die US-Patentschrift 3 980 602, in der ein Dispergiermittel für eine wäßrige Acrylharz-Farbzusammensetzung beschrieben ist sowie auf die europäische Offenlegungsschrift 0 115 694, die wäßrige Acrylharzdispersionen und ihre Verwendung für Schutzschichten beschreibt.

Solche Dispersionen sind zum Teil sehr kompliziert aufgebaut, zum Teil sind sie nur für ganz spezielle Anwendungszwecke ausgerichtet. Häufig enthalten die Dispersionen auch Bestandteile, die eine umweltfreundliche Anwendung unmöglich machen.

Der Erfindung liegt die Aufgabe zugrunde, wäßrige Dispersionen von carboxylgruppenhaltigen Polymeren zu schaffen, die einfach aufgebaut sind, eine umweltfreundliche Anwendung erlauben und leicht herzustellen sind.

Die erfindungsgemäßen Dispersionen sind dadurch gekennzeichnet, daß das Polymer unvernetzt ist, das wäßrige Medium frei von organischen Lösungsmitteln ist und die Carboxylgruppen der Polymere teilweise neutralisiert sind. Das Polymer ist vorzugsweise frei von vernetzbaren Gruppen.

Solche Polymerdispersionen sind in der Handhabung außerordentlich sicher, da keine organischen Lösungsmittel verdampfen, die gesundheitsschädlich oder aufgrund ihrer Brennbarkeit gefährlich sein können. Bei den erfindungsgemäßen Dispersionen sind in der Regel 2 bis 20 Mol-%, vorzugsweise 3 bis 8 Mol-% der Carboxylgruppen neutralisiert. Bezogen auf das Gewicht des Copolymers besitzt dieses vorzugsweise 0,1 bis 1 Gew.-% neutralisierte Carboxylgruppen. Durch diese teilweise Neutralisation der Carboxylgruppen haben die Polymere eine verstärkt hydrophile Oberfläche, ohne jedoch in dem wäßrigen Medium löslich zu sein. Die elektrische Aufladung infolge der dissoziierten Carboxylgruppen sorgt für eine ausreichende Stabilisierung der dispergierten Polymerteilchen im wäßrigen Medium. Als ungesättigte Carbonsäuren für das Polymer kommen vor allem Monocarbonsäuren, wie Acrylsäure und Methacrylsäure in Frage. Methacrylsäure ist bevorzugt. Es können auch Gemische verwendet werden. Das zweite Monomer, d.h. im Falle eines Copolymers, ist vorzugsweise ein Ester der Acrylsäure oder der Methacrylsäure mit einem Alkohol mit 1 bis 4 C-Atomen, insbesondere Ethylacrylat. Methacrylsäure und Ethylacrylat geben miteinander besonders geeignete Copolymere für die erfindungsgemäße Dispersion. Ist das Polymer ein Terpolymer, dann ist als drittes Monomer vorzugsweise ein Ester der Acrylsäure oder Methacrylsäure mit einem Alkohol mit 1 bis 18 C-Atomen vorgesehen, das jedoch verschieden vom zweiten Monomer ist. Als Termonomer eignet sich insbesondere Butylacrylat.

Mit besonderem Vorteil ist das Polymer ein Copolymer aus 2 bis 6 Mol, insbesondere 3,5 bis 4 Mol Comonomer pro Mol Methacrylsäure und/oder Acrylsäure. Gut geeignet sind auch Terpolymere aus 2 bis 6, vorzugsweise 3,5 bis 4 Mol Comonomer und 0,05 bis 1, vorzugsweise 0,1 bis 0,5 Mol Termonomer pro Mol Methacrylsäure und/oder Acrylsäure. Für die erfindungsgemäße Dispersion geeignete Polymere und ihre Herstellung sind in der europäischen Patentanmeldung 84 111 508.2 (Veröffentlichungs-Nr. 0 143 935) beschrieben, auf deren Inhalt hier Bezug genommen wird. Das Polymer ist vorzugsweise ein Substanzpolymerisat. Beim Polymer handelt es sich mit besonderem Vorteil um einen Thermoplasten. Diese Polymere lassen sich leicht lösungsmittelfrei herstellen.

Der Carboxylgruppengehalt des Polymers liegt, bezogen auf das Polymergewicht, vorzugsweise bei 5 bis 15, insbesondere 8 bis 12 Gew.-%. Das Polymer ist im stark sauren Bereich unlöslich in Wasser, in alkalischem Bereich vollständig löslich und im neutralen bis schwach sauren Bereich für die Bildung einer Dispersion geeignet. Der Polymergehalt der Dispersion liegt normalerweise im Bereich von 5 bis 75 Gew.-%, insbesondere 10 bis 30 Gew.-% (nach DIN 53189), bezogen auf das Gesamtgewicht der Dispersion. Insbesondere dann, wenn die Dispersion nur wenig Polymer enthält, d.h. ca. 5 bis 30 Gew.-%, dann enthält sie vorzugsweise noch ein Thixotropiermittel, insbesondere Bentonit, um ihre Handhabung zu erleichtern, z.B. bei der Herstellung von Überzügen.
Hierzu reichen in der Regel 0,5 bis 2 Gew.-% Thixotropiermittel, bezogen auf das Gesamtgewicht der Dispersion aus.

Tenside und sonstige Dispersionsstabilisatoren können vorgesehen sein, sind jedoch nicht erforderlich. Mit besonderem
Vorteil ist die Dispersion sogar frei von Tensiden und Dispersionsstabilisatoren. Bei einer bevorzugten Ausführungsform der Erfindung ist die Dispersion im wesentlichen frei,
vorzugsweise völlig frei von nicht zum Polymer gehörenden
Anionen, abgesehen von dem natürlich immer vorhandenen geringen Gehalt an $OH^-$-Ionen des Wassers. Mit besonderem Vorteil enthält das Polymer selbst auch keine hydrophilen Gruppen oder geladenen Reste außer den von der Monocarbonsäure
stammenden Carboxylgruppen. Dadurch werden einfache Ladungs-
und Löslichkeitsverhältnisse geschaffen, die sich bei der
Handhabung vorteilhaft auswirken. Durch Estergruppierungen
können die löslichkeitseigenschaften in gewissem Umfange
variiert werden.

Der pH-Wert der Dispersion hängt von der Anzahl der vorhandenen Carboxylgruppen und von der Menge der neutralisierten
Carboxylgruppen ab. Bei typischen Dispersionen nach der Erfindung ist der pH-Wert kleiner als 7 und liegt vorzugsweise
zwischen 4 und 6,5, insbesondere zwischen 5 und 6 (nach DIN
53785).

Für die Neutralisation der Carboxylgruppen sind vorzugsweise
einwertige Ionen vorgesehen, insbesondere Natrium- oder Ammoniumionen. Die Viskosität der Dispersion kann in weiten
Bereichen eingestellt werden und hängt u.a. vom Gehalt an
Polymer, der Teilchengröße des Polymers und der Herstellung
der Dispersion ab. Die Teilchengröße der Polymerteilchen ist
kleiner als 20 µm und liegt vorzugsweise im Bereich von 0,1

bis 10 µm, insbesondere 0,1 bis 5 µm. Die Viskosität liegt normalerweise im Bereich von 10 bis 50 sec Auslaufzeit aus einem Becher 48540.

Die erfindungsgemäßen Dispersionen eignen sich besonders zur Herstellung von Überzügen, vorwiegend solchen, die nach ihrem bestimmungsgemäßen Gebrauch durch Aufbringen eines schwach alkalischen wäßrigen Mediums wieder ablösbar sein sollen. Sie eignen sich zur Herstellung von vorübergehenden Schutzüberzügen für Kraftfahrzeuge anstelle der bisherigen Anwendung von wachsartigen Überzügen. Die Dispersionen eignen sich auch für andere Einsatzzwecke, wo Gegenstände und Materialien vor Luft, Licht und Feuchtigkeit zu schützen sind. Wenn erwünscht, können die Dispersionen mit Pigmenten und Stabilisatoren gegen Licht u.dgl. versetzt sein.

Die erfindungsgemäßen Dispersionen ergeben nach ihrem Auftragen selbst bei niedrigen Temperaturen zwischen 0 °C und Umgebungstemperatur homogene geschlossene Filme. Es gibt vielfältige Applikationsformen für die erfindungsgemäßen Dispersionen, wie Aufstreichen, Spachteln, Walzen, Tauchen, Fluten, Gießen, Spritzen u.dgl. Aufgrund ihrer definierten elektrischen Ladung eignen sich die erfindungsgemäßen Dispersionen auch besonders für elektrische Beschichtungsvorgänge, und zwar nicht nur für das elektrostatische Spritzen, sondern insbesondere auch für die Aufbringung durch Elektrophorese und die Chemiphorese (Autophorese). Auch ein Einbrennen der Beschichtungen bei erhöhter Temperatur ist möglich.

Die Polymere der erfindungsgemäßen Dispersionen können zum Teil auf herkömmliche Weise hergestellt werden, so z.B. durch Emulsionspolymerisation bzw. Suspensionspolymerisation. Besonders geeignet sind jedoch Dispersionen, die aus dem fertigen festen bzw. geschmolzenen Polymerisat hergestellt sind, weil hier das Mitführen von Fremdstoffen in die Dispersion, die aus der Herstellung der Polymere stammen, vermieden werden kann. Durch Substanzpolymerisation erhaltene, insbesondere thermoplastische, im Extruder hergestellte Polymere sind als Ausgangsmaterial besonders geeignet. Diese Herstellungsweise ermöglicht eine Vielfalt von Variationen in der Zusammensetzung der Polymere, wie sie durch Emulsions- oder Dispersionspolymerisation nicht erreicht werden kann.

Die Zerkleinerung der Polymere erfolgt vorzugsweise ausgehend von einem Granulat, Pulver oder einer Schmelze. Zwar können die Polymere mechanisch bis zur gewünschten Feinheit vermahlen werden, doch haben sich andere Methoden als vorteilhafter erwiesen. Vorzugsweise erfolgt die Zerkleinerung des vorher hergestellten trockenen Polymerisats in einem wäßrigen Medium, das insbesondere alkalisch ist, so daß während der Zerkleinerung eine mindestens teilweise Neutralisation der Carboxylgruppen des Polymers stattfindet. Das erfindungsgemäße Polymer wird mit Vorteil mindestens teilweise neutralisiert, bevor es in die Dispersion umgewandelt wird.

Bei einer besonders bevorzugten Ausführungsform des erfindungsgemäßen Verfahrens wird das Polymer in Form einer teilweise neutralisierten Schmelze mit dem wäßrigen Medium versetzt und unter Zerkleinerung vermischt. Dabei ist die teilweise Neutralisation der Schmelze mit Vorteil geringer als in der fertigen Dispersion, und das wäßrige Medium enthält die restliche Menge an basischwirkender Substanz, um den gewünschten Neutralisationsgrad zu erreichen. Die teilweise Neutralisation des noch nicht zerkleinerten Polymers und der Gehalt des wäßrigen Mediums sind somit vorzugsweise so aufeinander abgestimmt, daß sich Dispersionen im gewünschten pH-Bereich ergeben.

Die teilweise neutralisierte Schmelze kann dadurch hergestellt werden, daß basische Stoffe, insbesondere Soda, in
das vorher hergestellte Polymer, insbesondere in geschmolzenem Zustand, eingemischt werden, was beispielsweise in einem
Extruder oder Kneter vorgenommen werden kann. Es ist mit
besonderem Vorteil aber auch möglich, die teilweise Neutralisation schon während oder vor der Herstellung der Polymere, d.h. während oder vor der Polymerisation vorzunehmen.
Dies ist möglich, indem ein Teil der als Monomer verwendeten
ungesättigten Monocarbonsäuren in Salzform, insbesondere als
Natriumsalz, eingesetzt und als solches mit einpolymerisiert
wird. Dies kann vorzugsweise unter Verwendung einer Vorrichtung und nach dem Verfahren vorgenommen werden, wie es in
der europäischen Patentanmeldung 84 109 569.8 (Veröffentlichungsnummer 0 142 894) beschrieben ist. In dem teilweise
neutralisierten "trockenen" Polymer sind vorzugsweise 0,1
bis 1 Gew.-%, insbesondere 0,3 bis 0,7 Gew.-% Carboxylgruppen, bezogen auf das Gesamtgewicht des Polymers, neutralisiert. Dies entspricht normalerweise etwa 2 bis 20, vorzugsweise 4 bis 6 % der vorhandenen Carboxylgruppen. Als wäßriges Medium wird vorzugsweise eine Soda-Lösung zugegeben. Das
Vermischen von vorher teilweise neutralisiertem Polymer und
der alkalischen Lösung bzw. Wasser kann kontinuierlich so
weit vorgenommen werden, bis der gewünschte Dispersionsgrad
erreicht ist. Es wird dann die fertige Dispersion in einem
Zuge erhalten. Es ist auch ein Vorquellen bei Raumtemperatur
oder in der Wärme mit einem Teil des wäßrigen Mediums möglich.

Die Herstellung der Dispersion erfolgt somit unter Einstellung des pH-Wertes und zwar im vorbeschriebenen Fall durch
vorzugsweise ständige Erhöhung des pH-Wertes. Bei einer anderen Ausführungsform erfolgt die Herstellung der Dispersion
ebenfalls durch Einstellung des pH-Wertes jedoch durch ständige Erniedrigung des pH-Wertes, indem man von einer Lösung
des Polymers ausgeht und durch Senken des pH-Wertes auf den gewünschten Grad das Polymer ausfällt und die Dispersion
bildet. Zur Durchführung dieser Ausführungsform geht man
vorzugsweise vom noch nicht vorneutralisierten Polymer aus,
beispielsweise von einem Granulat, wie es insbesondere durch
Substanzpolymerisation erhalten ist. Das Polymerisat wird
dann in einem wäßrigen alkalischen Medium, das vorzugsweise
eine flüchtige Base, insbesondere Ammoniumhydroxyd enthält,
gelöst, wobei die Erniedrigung des pH-Wertes der Lösung vorzugsweise durch teilweise Entfernung, insbesondere durch
Verdampfen der Base, vorgenommen wird. Im Gegensatz zu einer
einfachen Neutralisation durch Zugabe von Säure hat das Entfernen der Base den Vorteil, daß eine Dispersion erhalten
wird, die in ähnlicher Weise salzfrei ist wie die nach der
vorbeschriebenen Ausführungsform durch Erhöhen des pH-Wertes
hergestellte Dispersion. Dies bedeutet, daß keine freien
Salze im wäßrigen Medium vorhanden sind außer der Salzbildung am Polymer selbst durch die teilweiseNeutralisation der
Carboxylgruppen.

Das Entfernen der Base kann auf verschiedene Weise erfolgen.
Geeignet ist die Entfernung durch Ionenaustausch mit Hilfe
eines Ionenaustauschers. Besonders bevorzugt ist jedoch ein
Verdampfen der flüchtigen Base insbesondere bei erhöhter
Temperatur. Die Base kann beispielsweise durch Abdestillation eines Teils der wäßrigen Phase in genügendem Maße mit
entfernt werden, so daß eine Erniedrigung auf den gewünschten pH-Bereich erzielt wird. Eine Druckdestillation bei Temperaturen über 100 °C, insbesondere im Bereich von 120 bis
150 °C führt, insbesondere beim Abdestillieren von Ammoniak,
schnell zum gewünschten Ergebnis. Gegebenenfalls kann dem
Medium wieder Wasser zugeführt werden, um ein gewünschtes
Verhältnis von Polymer zu dispergierendem Medium aufrechtzuerhalten. Die Wasserzugabe kann anteilweise oder kontinuierlich erfolgen. Im allgemeinen wird gemäß der Erfindung entionisiertes Wasser verwendet, dem die ggf. benötigten Chemikalien zugesetzt sind. Auf diese Weise wird die Einschleppung von unerwünschten Fremdionen vermieden.

Weitere Merkmale, Einzelheiten und Vorteile der Erfindung ergeben sich aus der nachfolgenden Beschreibung von bevorzugten Ausführungsbeispielen in Verbindung mit den Unteransprüchen.

## Beispiel 1

### Herstellung von Disperionen aus der Polymerschmelze nach partieller Neutralisation.

Für dieses Beispiel wurde ein Ethylacrylat-Acrylsäure- Copolymer mit einem Mol-Verhältnis von 3,5 : 1 verwendet, das durch Polymerisation im Extruder hergestellt war (Schmelzindex 12 g pro 10 Minuten bei 150 °C - DIN 53 735 -, Säurezahl 127). Ein Granulat dieses Polymers wurde im Kneter bei 120 bis 130 °C aufgeschmolzen und mit ca. 5 Mol-% der zur vollständigen Salzbildung theoretisch nötigen Sodamenge verknetet. Es wurde Soda (Siebfraktion 63 - 125 µm) eingesetzt. Nach dem Einmischen des Sodapulvers wurde die Polymer-Soda-Mischung auf unter 100 °C abgekühlt, sie war dann aber immer noch geschmolzen. Die Masse wurde dann sukzessiv bis zur gewünschten Konzentration durch Zugabe von Wasser verdünnt. Die Zugabe des Wassers bei erhöhter Temperatur ist besonders bevorzugt wegen der geringen Viskosität und der damit verbundenen guten Vermischung.

Im einzelnen wurde folgendermaßen vorgegangen:
570 g des Polymerisats (Carboxylgruppengehalt 10,2 Gew.-%, bezogen auf das Gewicht des Polymerisats), wurden zunächst bei 120 °C auf einem Kneter homogenisiert. Danach wurden der Schmelze bei 120 bis 130 °C 5 g kristallwasserfreies Soda-

pulver (Siebfraktion 63 - 135 µm) zugegeben und in das Polymer eingearbeitet. Die Masse wurde danach auf 80 bis 85 °C abgekühlt, wobei 450 ml entionisiertes Wasser anteilmäßig oder kontinuierlich unter gleichzeitiger guter Vermischung zugegeben wurden. Danach wurde die erhaltene Mischung mit entionisiertem Wasser auf einen Feststoffgehalt von 40 Gew.-% verdünnt. Hierbei wurde eine sehr feine niedrig viskose Dispersion mit einem pH-Wert von 6,2 erhalten.

## Beispiel 2

570 g des Granulats nach Beispiel 1 wurden bei 120 °C auf einem Kenter aufgeschmolzen. Danach wurden 4 Mol-% der Carboxylgruppen durch Zugabe von 4 g wasserfreier Soda (Siebfraktion 63 bis 125 µm) und Einmischen der Soda in die Schmelze neutralisiert. Anschließend wurde die Masse auf 80 bis 90 °C abgekühlt, wobei in die Schmelze sukzessive 0,005 %ige wäßrige Sodalösung eingearbeitet wurde, bis ein Feststoffgehalt von ca. 40 % erreicht war. Die fertige Dispersion hatte einen pH-Wert von 6,2. Die Teilchengröße der Dispersionspartikel lag zu 90 % unter 4 µm.

## Beispiel 3

### Herstellung der Dispersion aus der
### Polymerschmelze nach Salz-Einpolymerisation.

In diesem Beispiel erfolgte die Herstellung des carboxylgruppenhaltigen Polymers, in dem ein Teil, nämlich 5 Mol-% der Methacrylsäure durch Natriumacrylat oder Natriummethacrylat ersetzt wurden. Die Herstellung des Polymers erfolgte im Extruder in gleicher Weise wie die Herstellung des Polymers nach Beispiel 1. Das fertige Polymer entsprach aber durch die Einpolymerisierung des Salzes der Carbonsäure be-

A 22 231                    - 11 -                    0249828

reits dem teilweise neutralisierten Produkt der vorhergehenden Beispiele nach Einarbeiten der Soda. Das Polymerisat
wurde auf dem Kneter bei 100 °C homogenisiert und wiederum
bei 80 bis 90 °C mit entionisiertem Wasser dispergiert. Es
kann jedoch auch direkt das nach der Polymerisation erhaltene, noch geschmolzene Polymerisat mit Wasser zur Dispersion
verarbeitet werden.

Je nach dem Anteil des als Monomer eingesetzten Salzes der
Carbonsäure kann das Dispergieren mit reinem Wasser oder mit
alkalischem Wasser, z.B. Sodawasser, erfolgen, wobei die zur
teilweisen Neutralisation verwendeten Basenmengen jeweils so
aufeinander abgestimmt sind, daß eine stabile Dispersion
erhalten wird.


## Beispiel 4

### Die Herstellung der Dispersion durch Druckdestillation.

In ammoniakalischen Lösungen von carboxylgruppenhaltigen
Polymeren liegt ein Gleichgewicht zwischen Ammoniak und Ammoniumionen infolge Hydrolyse vor. Es wurde gefunden, daß
durch eine Destillation bei erhöhter Temperatur unter Druck
dieses Gleichgewicht durch Entfernen von Ammoniak in der
Weise verschoben werden kann, daß zunehmend weniger Carboxylgruppen in Salzform vorliegen.

In einem Drucktopf, der mit Manometer, Thermometer, Luftventil, Überdruckventil und Sicherheitsventil ausgerüstet war,
wurden 200 g Ethylacrylat-Methacrylsäure-Copolymer mit einem
Carboxylgruppengehalt von 10,4 % in 1800 ml entionisiertem
Wasser und 12 ml 30 %igem Ammoniak (40 % der zur Salzbildung
theoretisch benötigten Menge) bei gleichzeitigem Erhitzen
bis auf 127 bis 128 °C aufgelöst. Dabei stellte sich ein
Druck von ca. 1,5 bar ein, und es wurde durch das Sicherheitsventil ein Gemisch aus Wasserdampf und Ammoniak abdestilliert. Es wurden zwei Mal 1000 ml Wasser abdestilliert, wobei 1000 ml ersetzt wurden. Nach dem Abkühlen auf
ca. 60 °C wurde die fertige Dispersion über ein Sieb von
71 µm abfiltriert. Die erhaltene Dispersion hatte bei einer
Dichte von 1,03 g/cm$^3$ einen Feststoffgehalt von 20 % und
einen pH-Wert von 5,5.

### Beispiel 5

Die Vorgehensweise von Beispiel 4 wurde wiederholt, wobei
das Granulat in 1800 ml entionisiertem Wasser und 21 ml
30 %igem Ammoniak (70 % der theoretisch nötigen Menge) gelöst wurde. Die Lösung wurde auf 120 bis 122 °C erhitzt,
wobei sich ein Druck von 1,2 bar einstellte. Durch das Sicherheitsventil wurde ein Gemisch aus Ammoniak und Wasser
abdestilliert. Es wurden kontinuierlich 2000 ml Ammoniak-
Wassergemisch entfernt, von denen 1000 ml durch kontinuierliche Zugabe von entionisiertem Wasser ersetzt wurden. Der
pH-Wert der letzten 100 ml Destillat lag bei 10,3 bei 20 °C.

Nach dem Abkühlen auf ca. 60 °C wurde die fertige Dispersion
durch ein 71 µm-Stahlsieb abfiltriert. Die erhaltene Dispersion hatte eine Dichte von 1,03 g/cm$^3$, einen Feststoffgehalt
von 20 % und einen pH-Wert von 5,5. Die Teilchengröße der
Dispersionspartikel lag zu 90 % unter 1 µm.

Die aus der Beschreibung und den Ansprüchen hervorgehenden einzelnen Merkmale können jeweils für sich allein oder
zu mehreren z.B. in Form von Unterkombinationen vorteilhafte und für sich schutzfähige Ausführungen darstellen,
für die hier Schutz beansprucht wird.

# 0249828

PATENTANWÄLTE  RUFF UND BEIER  STUTTGART

Dipl.-Chem. Dr. Ruff
Dipl.-Ing. J. Beier
Dipl.-Phys. Schöndorf

Neckarstraße 50
D-7000 Stuttgart 1
Tel.: (0711) 22 70 51*
Telex 07-23412 erub d
Telefax (49) 0711-29 29 35

A 22 231                                    22. Mai 1987 R/lg

Anmelder:      RB Kunststoffpatent-
               Verwertungs AG
               Westbahnhofstraße 11

               CH-4500 Solothurn

Patentansprüche

- - - - -

## Wäßrige Polymerdispersion und
## Verfahren zu ihrer Herstellung sowie Verwendung

1. Dispersion aus Polymeren von mindestens zwei verschiedenen einfach ungesättigten radikalisch polymerisierbaren Verbindungen, von denen mindestens eine eine einfach ungesättigte Carbonsäure ist, in wäßrigem Medium, dadurch gekennzeichnet, daß das Polymer unvernetzt ist, das Medium frei von organischen Lösungsmitteln ist und die Carboxylgruppen des Polymers teilweise neutralisiert sind.

2. Dispersion nach Anspruch 1, dadurch gekennzeichnet, daß das Polymer frei von vernetzbaren Gruppen ist.

A 22 231 — 2 — 0249828

3. Dispersion nach Anspruch 1 oder 2, dadurch gekennzeichnet, daß sie einen pH-Wert kleiner 7, vorzugsweise zwischen 4,0 und 6,5, insbesondere zwischen 5 und 6, hat.

4. Dispersion nach einem der vorhergehenden Ansprüche, dadurch gekennzeichnet, daß das Polymer ein Substanzpolymerisat ist, das vorzugsweise thermoplastisch ist.

5. Dispersion nach einem der vorhergehenden Ansprüche, dadurch gekennzeichnet, daß die ungesättigte Carbonsäure eine Monocarbonsäure, insbesondere Acrylsäure und/oder Methacrylsäure ist.

6. Dispersion nach einem der vorhergehenden Ansprüche, dadurch gekennzeichnet, daß das zweite Monomer ein Ester der Acrylsäure oder Methacrylsäure mit einem Alkohol mit 1 bis 4 C-Atomen, insbesondere Ethylacrylat ist.

7. Dispersion nach einem der vorhergehenden Ansprüche, dadurch gekennzeichnet, daß ein drittes Monomer ein Ester der Acrylsäure oder Methacrylsäure mit einem Alkohol mit 1 bis 18 C-Atomen ist, der verschieden von dem zweiten Monomer ist, insbesondere Butylacrylat ist.

8. Dispersion nach einem der vorhergehenden Ansprüche, dadurch gekennzeichnet, daß sie frei von Tensiden ist.

9. Dispersion nach einem der vorhergehenden Ansprüche, dadurch gekennzeichnet, daß sie frei von Dispersionsstabilisatoren ist.

10. Dispersion nach einem der vorhergehenden Ansprüche, dadurch gekennzeichnet, daß sie im wesentlichen frei, vorzugsweise völlig frei von nicht zum Polymer gehörenden Anionen ist.

A 22 231 — 3 — 0249828

11. Dispersion nach einem dervorhergehenden Ansprüche, dadurch gekennzeichnet, daß die Carboxylgruppen durch einwertige Ionen, insbesondere durch Alkali oder Ammoniumionen, teilweise neutralisiert sind.

12. Verfahren zur Herstellung einer Dispersion aus Carboxylgruppen enthaltenden Polymeren, insbesondere der Dispersion nach einem der vorhergehenden Ansprüche, dadurch gekennzeichnet, daß das fertige, mindestens grob disperse, lösungsmittelfreie und wasserfreie Polymer mindestens bis zur Dispersionspartikelgröße zerkleinert wird.

13. Verfahren nach Anspruch 12, dadurch gekennzeichnet, daß das Polymer spätestens während der Zerkleinerung, vorzugsweise vor der Zerkleinerung, mindestens zum Teil neutralisiert wird.

14. Verfahren nach Anspruch 12 oder 13, dadurch gekennzeichnet, daß die Zerkleinerung des Polymers in Gegenwart eines wäßrigen Mediums erfolgt, das vorzugsweise einen pH-Wert von mindestens 7 besitzt.

15. Verfahren nach Anspruch 13 oder 14, dadurch gekennzeichnet, daß die teilweise Neutralisation auf einen solchen Grad eingestellt wird, daß im dispergierten Polymer 2 bis 20, vorzugsweise 4 bis 6 Mol-% der Carboxylgruppen neutralisiert sind.

16. Verfahren nach einem der Ansprüche 13 bis 15, dadurch gekennzeichnet, daß die teilweise Neutralisation durch trockene Beimischung von basischen Stoffen durchgeführt wird.

17. Verfahren nach einem der Ansprüche 13 bis 16, dadurch gekennzeichnet, daß daß die teilweise Neutralisation des Polymers durch Einmischen von basischen Stoffen, insbesondere Soda, in die Polymerschmelze vorgenommen wird.

18. Verfahren nach einem der Ansprüche 13 bis 17, dadurch gekennzeichnet, daß das teilweise neutralisierte Polymer durch Einpolymerisieren von Anteilen von in Salzform vorliegendem Carbonsäuremonomer hergestellt wird.

19. Verfahren nach einem der Ansprüche 14 bis 18, dadurch gekennzeichnet, daß das teilweise neutralisierte Polymer, insbesondere in Form einer Schmelze, mit dem wäßrigen Medium, insbesondere einer wäßrig-alkalischen Lösung, versetzt und vermischt wird.

20. Verfahren nach einem der Ansprüche 14 bis 19, dadurch gekennzeichnet, daß die Dispergierung des teilweise neutralisierten Polymers in der Wärme, vorzugsweise bei Temperaturen zwischen 40 und 95 °C, insbesondere zwischen 60 und 85 °C, durchgeführt wird.

21. Verfahren nach einem der Ansprüche 14 bis 20, dadurch gekennzeichnet, daß das teilweise neutralisierte Polymer vor der Dispergierung bei Raumtemperatur bis 70 °C mit einem Anteil des wäßrigen Mediums vorgequollen wird.

22. Verfahren nach einem der Ansprüche 14 bis 21, dadurch gekennzeichnet, daß die teilweise Neutralisation des Polymers und der Gehalt des wäßrigen Mediums an basischen Stoffen so aufeinander abgestimmt werden, daß sich die Dispersion im gewünschten pH-Bereich ergibt.

23. Verfahren nach einem der Ansprüche 12 bis 15, dadurch gekennzeichnet, daß das Polymer zu seiner Zerkleinerung in einem wäßrig-alkalischen Medium vollständig aufgelöst und durch Erniedrigung des pH-Wertes unter Bildung der Dispersion ausgefällt wird.

24. Verfahren nach Anspruch 23, dadurch gekennzeichnet, daß das Polymer in einem wäßrigen Medium einer vorzugsweise flüchtigen Base, insbesondere Ammoniak, gelöst wird und die Erniedrigung des pH-Wertes durch teilweises Entfernen, insbesondere Verdampfen, der Base vorgenommen wird.

25. Verfahren nach Anspruch 24, dadurch gekennzeichnet, daß die Base bei erhöhter Temperatur und insbesondere unter Druck abdestilliert wird.

26. Verfahren nach Anspruch 24 oder 25, dadurch gekennzeichnet, daß das Verdampfen bzw. die Destillation bei Temperaturen über 100 °C insbesondere im Bereich von 120 bis 150 °C vorgenommen wird.

27. Verwendung der Dispersion nach einem der Ansprüche 1 bis 11 zur Herstellung von Überzügen, insbesondere Schutzüberzügen.

- - - - - - -